# EUROPÄISCHE PATENTSCHRIFT

(11) **EP 0 922 391 B1**
(45) Veröffentlichungstag und Bekanntmachung des Hinweises auf die Patenterteilung: **22.11.2006**
(21) Anmeldenummer: 97121917.5
(22) Anmeldetag: 12.12.1997
(51) Int. Cl.: A23B 4/12, A23B 4/22, C12N 1/20, C12R 1/245

(54) **Präparat zum Reifen von Rohwurst**
Composition for curing raw sausage
Composition pour la maturation de saucisse crue

(43) Veröffentlichungstag der Anmeldung: 16.06.1999
(73) Patentinhaber: Karl Müller GmbH & Co., 70469 Stuttgart (DE)
(72) Erfinder: Hammes, Walter P., Prof., D-70794 Filderstadt (DE)
(74) Vertreter: Thiel, Christian

(56) Entgegenhaltungen:
- EP-A- 0 130 228
- US-A- 4 579 740
- US-A- 5 354 687
- US-A- 5 531 989
- US-A- 5 587 314
- DATABASE WPI Section Ch, Week 9722 Derwent Publications Ltd., London, GB; Class D13, AN 97-239180 XP002057579 & JP 09 074 995 A (PRIMA MEAT PACKERS LTD) , 25.März 1997
- DATABASE WPI Section Ch, Week 9441 Derwent Publications Ltd., London, GB; Class B04, AN 94-332808 XP002057580 & WO 94 22459 A (EISAI CO LTD) , 13.Oktober 1994
- JAHREIS,G. ET AL: FOOD RESEARCH INTERNATIONAL, Bd. 35, 2002, Seiten 133-138,

## Beschreibung

Die Erfindung betrifft ein Präparat zum Reifen von Rohwurst, das Bakterien der Gattung Lactobacillus enthält. Die Erfindung betrifft ferner ein Verfahren zum Reifen von Rohwurst mit Hilfe solcher Mikroorganismen sowie Stämme von Lactobacillus casei mit den Hinterlegungsnummer DSM 11807 und 11808, sowie deren Verwendung in Nahrungsmitteln, Tierfutter und pharmazeutischen Zubereitungen.

Probiotische Nahrungsmittel sind seit vielen Jahren bekannt und haben zunehmende Marktanteile. Führend auf probiotischem Gebiet sind Molkereiprodukte, insbesondere rund 60 joghurtähnliche Produkte, die probiotische Bakterien enthalten. Auch probiotische Käse befinden sich bereits auf dem Markt. Inzwischen wurde auch die erste deutsche Rohwurst mit probiotischen Bakterien auf dem Markt eingeführt.

Probiotika sind nach der Definition der Europäischen Union in Brüssel lebende definierte Mikrooganismen, die nach ihrem Verzehr gesundheitsfördernde Effekte ausüben, die über das Maß der grundgegebenen ernährungsphysiologischen Effekte hinausgehen. Sie können als Lebensmittelbestandteil oder in Form einer Nicht-Lebensmittelpräparation aufgenommen werden.

Ein grundlegendes Problem bei probiotischen Nahrungsmitteln ist die Fähigkeit, den humanen Magen-/Darmtrakt lebend zu passieren. Aufgrund des hohen Salzsäuregehaltes und des daraus resultierenden niedrigen pH-Wertes ist der Keimgehalt im Magen gewöhnlich gering. Eine echte Magenflora gibt es nicht, wenn man von pathogenen Mikroorganismen, wie Helicobacter pylorü, absieht.

Die Keimzahlen werden ferner durch Enzyme und Gallensäuren, vor allem im Darmtrakt, reduziert. Von probiotischen Mikroorganismen wird verlangt, daß sie die Bedingungen im Magen/Darmtrakt zumindest tolerieren.

Vom Dünndarm zum Dickdarm hin nimmt die mikrobielle Besiedelung zu, wobei sowohl erwünschte Keime als auch solche mit physiologisch unerwünschtem Potential vorkommen. Im Faeces werden bis zu 4 x 10¹¹ KBE/g nachgewiesen, d. h. rund 40 % des Faeces bestehen aus Bakterienmasse.

Bei der Darmflora handelt es sich vor allem um Spezies der Gattungen Bacteroides, Eubacterium, Peptostreptococcus, Fusobacterium, Clostridium, Bifidobacterium, Lactobacillus u. a. (insgesamt ca. 400 Spezies).

Für die Bewertung der notwendigen Keimzahlen zur Erzielung probiotischer Effekte ist zu unterscheiden, ob die Effekte im Dünndarm oder im Dickdarm stattfinden. Im Extremfall können wenige Keime an den stark peristaltisch aktiven Dünndarm anbinden und aktiv werden. Im Dickdarm andererseits dürfte eine sehr viel höhere Keimmasse erforderlich sein, um physiologische Bedeutung zu erlangen.

Eine nennenswerte Besiedlung mit probiotischen Bakterien ist nur unter der Voraussetzung gegeben, daß die probiotischen Bakterien sowohl im Lebensmittel selbst als auch bei der Passage des Magen-/Darmtraktes in nennenswerten Keimzahlen überleben.

Angesichts der außerordentlich hohen Keimzahlen im Dickdarm ist es erforderlich, zur Erzielung von probiotischen Effekten entsprechend hohe Keimzahlen mit der Nahrung zuzuführen, im allgemeinen wenigstens 5 x 10^{*i*} KBE/g im zugeführten Lebensmittel.

Die Fermentierung (Absäuerung) von rohen Fleischwaren mit Milchsäurebildnern als Starterkulturen ist bekannt. Diese konventionellen Säurebildner sind im allgemeinen auf ihre Leistungsfähigkeit, und ihre industrielle Herstellungsmöglichkeit hin selektiert. Aus DE-C-37 39 989 ist ein Mikroorganismus vom Stamm Lactobacillus curvatus, DSM, 4265, bekannt, der zur Herstellung von fermentierten Fleischwaren geeignet ist. Aus DE-C-42 01 050 ist ferner ein Lactobacillus sake, DSM 6747, bekannt, der zum Reifen von Rohwurst eingesetzt werden kann. Andere Mikroorganismen, die zum Reifen von Rohwurst eingesetzt werden können, gehören zu den Spezies Pediococcus acidilactici, Pediococcus pentosacaeus, Lactobacillus plantarum, Staphylococcus carnosus und Staphylococcus xylosus. Nach Beendigung der Fermentation hat die fertige Wurstware in der Regel einen End-pH-Wert im Bereich von 4,8 bis 5,5. Die eingesetzten Milchsäurebakterien sind in der Regel wenig säureresistent und stellen das Wachstum bei einem pH-Wert von etwa 4,8 ein. Eine Überlebensfähigkeit bei einem pH-Wert von wengier als 4,0 ist in der Regel nicht gegeben.

Es ist wünschenswert, über probiotische Starterkulturen zu verfügen, die zur Reifung von Rohwurst eingesetzt werden können und darüber hinaus eine hinreichende Überlebensfähigkeit bei pH-Werten von weniger als oder gleich 2,5 aufweisen. Eine solche probiotische Starterkultur sollte ferner ebenfalls eine hinreichende Beständigkeit gegen Gallen-/Cholsäure aufweisen und vorzugsweise dazu fähig sein, sich im Darmtrakt anzusiedeln.

Dieses Ziel wird mit einem Präparat der eingangs genannten Art erreicht, das probiotische Bakterien der Gattung Lactobacillus enthält, die bei einem pH-Wert von ≤ 2,5 eine Überlebensrate von wenigstens etwa 50 % und in einer

JP 09074995 A beschreibt die Fermentation von Fleisch mit probiotischen Bakterien der Gattung Lactobacillus. Die probiotischen Bakterien überleben wenigstens 3 h in einer wässerigen HCl Lösung bei pH 3 und wachsen in einem Medium, das 1000 ppm Cholsäure in einem pH-Bereich von 5 bis 7 enthält. Zur Fermentation von rohen Fleischprodukten werden die Stämme Lacotbacillus acidophilus FERM P-15119, Lactobacillus casei ssp. alactosus FERM P-15121 und Lactobacillus rahmnosus FERM P-15121 eingesetzt. Geschmacklich und sensorisch werden die Produkte gut bewertet.

Cholsäurelösung von 10 mMol Cholsäure und pH 8,0 eine Überlebensrate von wenigstens 30% haben, gemessen nach jeweils 1 h.

Die pH- und cholsäureresistenten Mikroorganismen, die in dem erfindungsgemäßen Präparate zum Einsatz kommen, gehören der Spezies Lactobacillus casei. an, es handelt sich dabei um Mikroorganismen der Stämme Lactobacillus casei DSM 11807 und 11808, hinterlegt nach den Bestimmungen des Budapester Vertrags bei der DSMZ in Braunschweig am 01. Oktober 1997.

Das Mittel enthält, die Mikroorganismen ggfs. zusammen mit geeigneten Nähr- und Stabilisierungsmitteln, vorzugsweise in gefrorener, getrockneter oder gefriergetrockneter Form. Dabei können die Mikroorganismen mit den restlichen Bestandteilen des Mittels gemischt sein oder davon getrennt sein.

Besonders bevorzugt ist ein Mittel, das Bakterien enthält, die eine Überlebensrate von wenigstens etwa 40 % bei pH ≤ 2,0 in Salzsäure aufweisen.

Gemäß einer bevorzugten Ausführungsform kann das erfindungsgemäße Präparat zum Reifen von Rohwurst auch weitere technologisch vorteilhafte Mikroorgansimen enthalten. Die probiotischen Mikroorganismen tragen zur Reifung bei. Sie gewährleisten eine hinreichend dichte Besiedlung der gereiften Rohwurst, die bis hin zum Verzehr nachweisbar ist.

Als technologisch vorteilhafte Kulturen kommen insbesondere Stämme der Spezies Lactobacillus sake, Pediococcus acidilactici, Pediococcus pentosacaeus, Kokuria varians, Lactobacillus acidophilus, Lactobacillus curvatus, Lactobacillus plantarum, Staphylococcus carnosus und Staphylococcus xylosus allein oder als Mischung mehrerer davon, in Frage. Besonders bevorzugt ist der Stamm Lactobacillus sake, DSM 6747, wie er aus der DE-C-42 01 050 bekannt ist.

Die in dem erfindungsgemäßen Mittel zum Einsatz kommenden probiotischen Kulturen vermehren sich bei der Rohwurstreifung, tragen zur Fermentation unter technologisch und sensorischen Gesichtspunkten wesentlich bei, und überleben in der Rohwurst in hinreichend hoher Keimzahl über mehrere Wochen. Ferner können sie in hoher Anzahl den. Magen-/Darmtrakt lebend passieren. Sie adherieren an Darmzellen (gezeigt durch Adherenz an Caco2-Zellen), sind geeignet einen positiven Einfluß auf die Zusammensetzung der Darmflora zu nehmen und sind nach Verzehr der Rohwürste in Keimzahlen von > 10⁷ KBE/g Faeces nachweisbar. Der positive Einfluß ergibt sich hier aus dem Stoffwechsel der Keime sowie den adherierenden Eigenschaften, die in entsprechenden Studien als Voraussetzung für gesundheitsfördernde Effekte erkannt wurden.

Versuche haben gezeigt, daß eine Zugabe in einer Menge von 5 x 10⁶ KBE/g Wurstmasse ausreichend ist, um nach 24 bis 48 Stunden eine Gesamtkeimzahl von ≥ 10⁸ KBE/g bereitzustellen. Diese Keimzahl blieb auch nach 4-wöchiger Lagerzeit erhalten.

Die Erfindung betrifft ferner ein Verfahren zum Reifen von Rohwurst, dadurch gekennzeichnet, daß die Rohwurstmasse mit einem Präparat der vorbezeichneten Art beimpft und danach bei einer relativen Luftfeuchtigkeit von mehr als 70 % und einer Temperatur von wenigstens 18°C über einen Zeitraum von wenigstens 24 Stunden reifen gelassen wird.

Die Beimpfung erfolgt mit wenigstens 5 x 10⁶ KBE/g Wurstmasse der probiotischen Bakterien der Spezies Lactobacillus casei DSM 11807 und/oder DSM 11808. Die probiotischen Bakterien sollen nach Beendigung der Rohwurstreifung vorzugsweise wenigstens 5 x 10⁷ KBE/g Wurstmasse erreicht haben.

Des weiteren betrifft die Erfindung die Stämme Lactobacillus casei, DSM 11807 und 11808.

Schließlich betrifft die Erfindung auch die Verwendung der Stämme Lactobacillus casei, DSM 11807 und 11808, in Lebensmitteln und Getränken, beispielsweise solchen auf Milchbasis, in Nahrungsergänzungsmitteln als Probiotika in der menschlichen oder tierischen Ernährung, beispielsweise in Tablettenform als Nahrungsmittelergänzung, in Tierfutter jeglicher Art, beispielsweise in Silage, sowie in pharmazeutischen Zubereitungen zum Aufbau oder zur Beeinflußung der Darmflora.

Im allgemeinen enthalten Lebensmittel, Getränke und Futtermittel diese Mikroorgansimen in einer Menge von 10⁶ bis 5 x 10⁸ KBE/g. In pharmazeutischen Zubereitungen und solchen Zubereitungen, die ergänzend zur menschlichen und tierischen Ernährung verabreicht werden, liegt der Mikroorganismengehalt bei bis zu 10⁹ oder 10¹⁰ KBE/g. Sofern die Mikroorganismen nicht direkt in Lebensmitteln, Getränken und Tierfutter enthalten sind, können sie in gefrorener, getrockneter oder gefriergetrockneter Form eingesetzt werden, aber auch beispielsweise in in einem geeignetem Medium suspendierter Form, wie sie insbesondere auf pharmazeutischem Gebiet für die Verabreichung an Kinder entwickelt wurden.

Die Erfindung wird durch das folgende Ausführungsbeispiel näher erläutert.

### Beispiel

### Kulturen

Lactobacillus casei DSM 11807
Lactobacillus sake DSM 6747
Staphylococcus carnosus, handelsübliche Qualität, Fa. Gewürzmüller, Stuttgart, Deutschland

Folgende Materialzusammenstellung wurde für eine schnittfeste Salami verwandt

| | |
|---|---|
| 30 kg | Rindfleisch, grob entsehnt, sichtbarer Fettanteil 5%, |
| 30 kg | Schweinefleisch, sehnenfrei, sichtbarer Fettanteil 5 %, |
| 20 kg | Schweinebauch, sichtbarer Fettanteil 60 %, |
| 20 kg | Rückenspeck, ohne Schwarte. |

### Zugegeben wurden die folgenden Zutaten (pro kg Material)

| | |
|---|---|
| 28,0 g | Kochsalz, |
| 0,3 g | Kaliumnitrat, |
| 4,0 g | Glucose, |
| 2,0 g | Gewürz, |
| 5 x 10⁹ | Lactobacillus casei DSM 11807, gefriergetrocknet, |
| 5 x 10⁹ | Lactobacillus sake DSM 6747, gefriergetrocknet, |
| 5 x 10⁹ | Staphylococcus carnosus, gefriergetrocknet (zur Optimierung der Umrötung, handelsübliche Qualität). |

Zur Herstellung der Rohwurstmasse wurden die Materialien jeweils in Stücke geschnitten, das Rindfleisch, der Schweinebauch und der Speck hartgefroren und das Schweinefleisch gut durchgekühlt und unmittelbar vor der Verarbeitung in üblicher Weise gewolft.

Die gefriergetrockneten Starter- und probiotischen Kulturen wurden zur Rehydratisierung in 500 ml Wasser eingerührt.

Unter Zugabe der Kultur wurde das Rindfleisch so lange im Kutter vorzerkleinert, bis die Masse etwas bindet. Danach wurden Kaliumnitrat, Glucose sowie Gewürze hinzugefügt und die Masse noch eine kurze Zeit im Kutter belassen, um eine ausreichende Vermischung zu erzielen. Danach wurden Speck und Schweinebauch zugesetzt. Es wurde solange weitergekuttert, bis der Speck eine Körnung von 6 bis 8 mm aufwies. Anschließend wurde das vorgewolfte Schweinefleisch mit dem Kochsalz eingekuttert und die Gesamtmasse solange weitergekuttert, bis das Fett die übliche Körnung von etwa 2 mm und die Wurstmasse Bindung aufwies. Die fertige Wurstmasse mit eine Temperatur von -2°C wurde in wasserdurchlässige Hautfaserdärme vom Kaliber 70 mm eingefüllt. Anschließend wurden die gefüllten Därme zur Reifung in die Klimakammer gebracht.

Zunächst wurden die Würste bei 70 % relativer Luftfeuchtigkeit bei 18°C Temperatur 6 Stunden konditioniert, um das äußere Schwitzwasser wegzutrocknen. Danach wurde zur weiteren Konditionierung die relative Luftfeuchtigkeit 18 Stunden auf 94 % erhöht. Die eigentliche Reifung folgte bei einer Anfangstemperatur von 24°C über einen Zeitraum von 36 bis 48 Stunden, wobei die Temperatur und Luftfeuchtigkeit langsam auf übliche Bedingungen zurückgenommen und die Würste geraucht wurden.

Nach der Trocknung unter üblichen Nachreifebedingungen wurde in der Wurst ein pH-Wert von 5,0 festgestellt. Die Würste wiesen im Anschnitt eine hervorragende Umrötung sowie eine sehr haltbare und ansprechende Pökelfarbe auf.

Die mikrobiologische Untersuchung ergab für die probiotische Kultur Lactobacillus casei DSM 11807 eine Keimzahl von über 10⁸ KBE/g Wurstmasse.

Diese Keimzahl veränderte sich in den folgenden Wochen nicht wesentlich; noch nach 4 Wochen waren mehr als 10⁸ KBE/g Wurstmasse nachweisbar.

Die so hergestellte Salami bestand die sensorischen Prüfungen. Nach einmaligem Verzehr einer Menge von 50 g diesesr Wurst konnte der Stamm L. casei DSM 11807 im Faeces des Konsumenten mit > 10⁷ KBE/g nachgewiesen werden. Der Anteil der eingesetzten Kulturkeime an der Gesamtlaktobazillenkeimzahl der Faeces betrug bis zu 60 %.

Untersuchungen zeigten, daß die erfindungsgemäß zum Einsatz kommenden Stämme DSM 11807 und 11808 eine Affinität zu Strukturen des humanen Dünndarms aufweisen. Die Befunde deuten darauf hin, daß die säuretoleranten Laktobazillen ohne Vitalitätsverlust in den Darm gelangen und sich dort ansiedeln und sogar vermehren. Im untersuchten Faeces wurden nennenswerte bis hohe Anteile der eingesetzten säuretoleranten Laktobazillen nachgewiesen.

Es ist bekannt, daß die Ansiedlung probiotischer Kulturen im Darmtrakt geeignet ist, das unspezifische Immunsystem zu stimulieren und Erkrankungen vorzubeugen. Eine solche Stimulierung des unspezifischen Immunsystems wurde auch mit einer verminderten Koinzidenz von Kolonkarzinomen in Verbindung gebracht.

## Patentansprüche

1. Präparat zum Reifen von Rohwurst enthaltend probiotische Bakterien der Spezies Lactobacillus casei, **gekennzeichnet durch** wenigstens einen der Stämme Lactobacillus casei DSM 11807 und 11808 wobei die Stämme bei einem pH-Wert von ≤ 2,5 eine Überlebensrate von wenigstens etwa 50 % haben und in einer 10 mM Cholsäurelösung bei pH 8,0 eine Überlebensrate von wenigstens etwa 30 %, gemessen nach jeweils 1 h.

2. Präparat nach Anspruch 1 in gefrorener, getrockneter oder gefriergetrockneter Form.

3. Präparat nach Anspruch 1 oder 2, **dadurch gekennzeichnet, daß** die Bakterien eine Überlebensrate von wenigstens etwa 40 %, gemessen in einer Salzsäurelösung bei einem pH-Wert von ≤ 2,0 über 1 h, haben.

4. Präparat nach einem der vorstehenden Ansprüche, **dadurch gekennzeichnet, daß** das weitere zur Reifung von Rohwurst geeignete Milchsäurebakterien enthält.

5. Verfahren zum Reifen von Rohwurst, **dadurch gekennzeichnet, daß** die Rohwurstmasse mit einem Präparat nach einem der Ansprüche 1 bis 4 beimpft und danach bei einer relativen Luftfeuchtigkeit von wenigstens 70 % und einer Temperatur von wenigstens 18°C über einen Zeitraum von wenigstens 24 h reifen gelassen wird. einer Temperatur von wenigstens 18°C über einen Zeitraum von wenigstens 24 h reifen gelassen wird.

6. Verfahren nach Anspruch 5, **dadurch gekennzeichnet, daß** die Rohwurstmassen mit wenigstens 5 x 10⁶ KBE/g Rohwurstmasse der Stämme L. casei DSM 11807 und/oder DSM 11808 beimpft wird.

7. Verfahren nach Anspruch 5 oder 6, **dadurch gekennzeichnet, daß** die genannten Bakterien nach Beendigung der Rohwurstreifung mit wenigstens 5 x 10⁷ KBE/g Rohwurstmasse zugegen sind.

8. Lactobacillus casei DSM 11807 und 11808.

9. Verwendung der Stämme nach Anspruch 8 in Lebensmitteln und Getränken.

10. Verwendung der Stämme nach Anspruch 8 zur Herstellung von Nahrungsergänzungsmitteln als Probiotika für die menschliche oder tierische Ernährung.

11. Verwendung der Stämme nach Anspruch 8 in Tierfutter.

12. Verwendung der Stämme nach Anspruch 8 zur Herstellung von pharmazeutischen Zubereitungen zum Aufbau oder zur Beeinflußung der Darmflora.

## Claims

1. A composition for curing raw sausage including probiotic bacteria of the species Lactobacillus caser, **characterised by** at least one of the strains Lactobacillus casei DSM 11807 and 11808 wherein the strains have a survival rate of at least 50% at a pH value of ≤ 2.5 and a survival rate in a 10mM cholic acid solution at pH 8.0 of at least about 30%, measured in each case after 1h.

2. A composition as claimed in claim 1 in frozen, dried or freeze-dried form.

3. A composition as claimed in claim 1 or 2, **characterised in that** the bacteria have a survival rate of at least about 40%, measured in a hydrochloric acid solution at a pH value of ≤ 2.0 over 1h.

4. A composition as claimed in one of the preceding claims, **characterised in that** it contains further lactic acid bacteria suitable for curing raw sausage.

5. A method of curing raw sausage, **characterised in that** the raw sausage mass is inoculated with a preparation as claimed in one of claims 1 to 4 and is then left to cure for a period of time of at least 24h at a relative air humidity of at least 70% and a temperature of at least 10°c.

6. A method as claimed in claim 5, **characterised in that** the raw sausage mass is inoculated with at least 5 x 10⁶ KBE/g raw sausage mass of the strains L. casei DSM 11807 and/or DSM 11808.

7. A method as claimed in claim 5 or 6, **characterised in that** the said bacteria are present after termination of the raw sausage curing with at least 5 x 10⁷ KBE/g raw sausage mass.

8. Lactobacillus casei DSM 11807 and 11808.

9. The use of the strains as claimed in claim 8 in foodstuffs and beverages.

10. The use of the strains as claimed in claim 8 for manufacturing food additives constituting probiotics for human or animal nutrition.

11. The use of the strains as claimed in claim 8 in animal fodder.

12. The use of the strains as claimed in claim 8 for manufacturing pharmaceutical preparations for producing or influencing intestinal flora.

## Revendications

1. Composition pour la maturation de saucisse crue contenant des bactéries probiotiques de l'espèce Lactobacillus casei, **caractérisée par** au moins une des souches de Lactobacillus casei DSM 11807 ou 11808, les souches présentant, pour une valeur de pH ≤ 2,5, un taux de survie d'au moins 50 % environ, et un taux de survie d'au moins 30 % environ dans une solution d'acide cholique 10 mM pour un pH de 8,0, tous deux mesurés toutes les heures.

2. Composition selon la revendication 1 sous une forme congelée, séchée ou lyophilisée.

3. Composition selon la revendication 1 ou 2, **caractérisée en ce que** les bactéries présentent un taux de survie d'au moins 40 % environ, mesuré dans une solution d'acide chlorhydrique pour une valeur de pH ≤ 2,0 sur une heure.

4. Composition selon l'une quelconque des revendications précédentes, **caractérisée en ce que** celle-ci contient, pour la maturation de saucisse crue, des bactéries d'acide lactique appropriées.

5. Procédé pour la maturation de saucisse crue, **caractérisé en ce que** la masse de saucisse crue est inoculée à l'aide d'une composition selon l'une quelconque des revendications 1 à 4 et **en ce qu'**elle est ensuite portée à maturation sous une humidité relative d'au moins 70 % et à une température d'au moins 18°C sur une période d'au moins 24 heures.

6. Procédé selon la revendication 5, **caractérisé en ce que** la masse de saucisse crue est inoculée avec au moins 5 x 10⁶ UFC/g de masse de saucisse crue des souches L. casei DSM 11807 et/ou DSM 11808.

7. Procédé selon la revendication 5 ou 6, **caractérisé en ce que** lesdites bactéries sont mélangées au terme de la maturation de la saucisse crue avec au moins 5 x 10⁷ UFC/g de masse de saucisse crue.

8. Lactobacillus casei DSM 11807 et 11808.

9. Utilisation des souches selon la revendication 8 dans des aliments et des boissons.

10. Utilisation des souches selon la revendication 8 pour la fabrication de compléments alimentaires sous la forme de probiotiques pour l'alimentation humaine ou animale.

11. Utilisation des souches selon la revendication 8 dans l'alimentation animale.

12. Utilisation des souches selon la revendication 8 pour la fabrication de préparations pharmaceutiques destinées à structurer et/ou à influer sur la flore intestinale.
